# EUROPÄISCHE PATENTSCHRIFT

(11) **EP 1 678 244 B1**
(45) Veröffentlichungstag und Bekanntmachung des Hinweises auf die Patenterteilung: **16.01.2008**
(21) Anmeldenummer: 04763413.4
(22) Anmeldetag: 23.07.2004
(51) Int. Cl.: C08J 9/00, C08J 9/16, C08L 33/00, C08F 220/18

(54) **WÄRMEFORMBESTÄNDIGE POLYMETHACRYLIMID-SCHAUMSTOFFE MIT FEINEN POREN**
THERMOSTABLE MICROPOROUS POLYMETHACRYLIMIDE FOAMS
MOUSSES DE POLYMETHACRYLIMIDE A STABILITE DIMENSIONNELLE A CHAUD ET A PORES FINS

(30) Priorität: 30.10.2003 DE 10350971
(43) Veröffentlichungstag der Anmeldung: 12.07.2006
(73) Patentinhaber: Evonik Röhm GmbH, 64293 Darmstadt (DE)
(72) Erfinder: SCHERBLE, Jonas, 64367 Mühltal (DE); GEYER, Werner, 64367 Mühltal (DE); SEIBERT, Hermann, 64289 Darmstadt (DE); MAIER, Leonhard, 63110 Rodgau (DE); JAHN, Torsten, 64807 Dieburg (DE); BARTHEL, Thomas, 64646 Heppenheim (DE)
(86) Internationale Anmeldenummer: PCT/EP2004/008218
(87) Internationale Veröffentlichungsnummer: WO 2005/047377

(56) Entgegenhaltungen:
- EP-A- 0 532 023
- EP-A- 0 874 019
- WO-A-03/020804

## Beschreibung

Die Erfindung betrifft Zusammensetzungen zur Herstellung von wärmeformbeständigen Polymethacrylimid-Schaumstoffen mit besonders feinen Poren, Verfahren zu deren Herstellung, Verarbeitung und Anwendung dieser Schaumstoffe.

Polymethacrylimid-Schaumstoffe (PMI-Schaumstoffe) sind bereits seit langer Zeit bekannt. Unter dem Handelsnahmen ROHACELL® finden diese Schaumstoffe insbesondere im Bereich der Schichtwerkstoffe viele Anwendungen (Laminate, Composits, Schaumstoffverbundkörper, Sandwichkonstruktionen, Sandwiches). Schichtwerkstoffe sind Formkörper, die aus einer außen liegenden Deckschicht und einem innen liegenden Kernwerkstoff aufgebaut sind. Als Deckschichten verwendet man Materialien, die uni- oder multiaxial äußerst hohe Zugkräfte aufnehmen können. Beispiele sind Glas- und Kohlefasergewebe oder auch Aluminiumplatten, die mit Klebeharzen auf dem Kernwerkstoff fixiert werden. Als Kernwerkstoffe werden bevorzugt Materialien mit geringen Raumgewichten, typischerweise im Bereich von 30 kg/m³ und 200 kg/m³ eingesetzt.

Man unterscheidet drei Klassen von Kernwerkstoffen. Als erste Klasse ist Balsaholz zu nennen. Balsaholz kann aufgrund seiner Faserstruktur insbesondere in Faserrichtung hohe Zug- und Druckkräfte aufnehmen, während es senkrecht dazu nur schwache mechanische Eigenschaften aufweist. Balsaholz ist also ein stark anisotroper Werkstoff. Die durchschnittliche Dichte liegt mit ~150 kg/m³ relativ hoch, ist jedoch für viele Anwendungen noch ausreichend niedrig. Vertrieben werden derartige Kernwerkstoffe beispielsweise unter dem Markennamen Baltec^{®} von dem Hersteller DIAB.

Eine weitere Klasse der Kernwerkstoffe bilden die Wabenstrukturen, wie beispielsweise die Nomex^{®}-Waben oder Waben aus Aluminium. Wabenstrukturen zeichnen sich durch besonders geringe Dichten bei hoher Belastbarkeit in Längsrichtung der Waben aus. In dieser Hinsicht sind Waben anderen Kernwerkstoffen überlegen. Treten jedoch bei der Verarbeitung oder beim fertigen Bauteil Kräfte senkrecht zur Wabenrichtung auf, so sind Waben weniger geeignet, da sie konstruktionsbedingt senkrecht zur Längsrichtung mechanisch schwach sind. Ein weiterer Nachteil ist, dass das zur Herstellung der Sandwichkonstruktion verwendete Harz in die Wabe hineinlaufen kann, so dass das Gesamtgewicht der Konstruktion erhöht wird. Hierdurch wird die Auswahl an Methoden, die zur Herstellung von Sandwichkonstruktionen auf der Basis von Waben zur Verfügung steht, stark eingeschränkt. Insbesondere ist der Einsatz von niederviskosen Harzsystemen, wie sie beispielsweise bei Harzinjektionsverfahren verwendet werden, mit Waben ausgeschlossen. Ein weiteres Problem ist die Bearbeitbarkeit der Waben, die insbesondere bei weniger einfach geformten Körpern sehr aufwändig und daher teuer ist.

Als dritte Klasse sind geschlossenporige Polymerhartschäume zu nennen. Isotrope Schäume sind in der Lage, Schubkräfte in allen Raumrichtungen aufzunehmen. Vorteilhaft ist die leichte Bearbeitbarkeit, die mit den bei Holz üblichen Werkzeugen und Maschinen erfolgen kann. Darüber hinaus können bestimmte Hartschäume, wie zum Beispiel ROHACELL®, thermisch umgeformt werden. Ein erheblicher Vorteil von geschlossenporigen Hartschäumen ist, dass kein Harz eindringen kann, was das Gesamtgewicht erhöhen würde.

Die Herstellung von Sandwichkonstruktionen war in der Vergangenheit unabhängig von den eingesetzten Deckschichten und Kernwerkstoffen aufwändig, weshalb sich solche Konstruktionen lange Zeit aus Preisgründen nicht richtig durchsetzen konnten. Klassische Verfahren zur Herstellung von Sandwichkonstruktionen sind Laminierverfahren, wo die Deckschicht trocken auf das Kernmaterial aufgelegt und anschließend mit Harz getränkt wird. Eine andere Methode beruht auf der Verwendung von Glas- oder Kohlefasermatten, die mit einem anpolymerisierten Harz getränkt sind ("Prepregs"). Die Viskosität dieser Harze ist in der Regel so hoch, dass kein Abtropfen stattfindet.

In jüngerer Zeit wurden neue, so genannte Harzinfusionsverfahren zur Herstellung von Sandwiches entwickelt. Der Sandwichkern wird von trockenem Fasermaterial belegt und in einem geschlossenen Werkzeug oder in einem luftdichten Beutel mit niederviskosem Harz getränkt. Der Vorteil dieser Methoden liegt zum einen in einer breiteren Palette von Harzsystem und Fasermaterialien und zum anderen in einer besseren Automatisierbarkeit.

Sandwichkonstruktionen können daher mit Hilfe dieser Verfahren meist billiger produziert werden. Zu den Harzinfusionsverfahren zählen zum Beispiel das RTM (Resin Transfer Molding), RIM (Resin Infusion Molding), SCRIMP (Seeman's Resin Infusion Molding Prozess™) und VARI (Vaccuum Assisted Resin Infusion). Weitere Einzelheiten werden in "Resin Transfer Molding, SAMPE® Monograph No.3" (ISBN 0-938994-83-2) beschrieben. Bei den Infusionsverfahren ist problematisch, dass die niederviskosen Harze die offenen Kavitäten der Kernwerkstoffe vollständig ausfüllen, weshalb z.B. Waben als Kernmaterialien ungeeignet sind.

Wird ein geschlossenporiger Schaum spanabhebend bearbeitet, so entstehen an der Oberfläche zwangsläufig offene Zellen. Diese stellen Kavitäten dar, die von niederviskosen Harzen gefüllt werden und so zu schwereren Bauteilen führen. Bei einem vollständig geschlossenporigen Schaum hängt die Harzaufnahme an der Oberfläche des Kernmaterials damit wesentlich von der Größe der Zellen ab. Aufgeschnittene große Zellen ergeben tiefe Kavitäten; in die viel Harz eindringen kann.

Eine direkte Messung der Harzaufnahme an der Oberfläche eine Schaumkerns ist kaum möglich. Um Proben dennoch miteinander vergleichen zu können, wurde daher die folgende Methodik entwickelt: Zunächst werden Dichte und Masse des tafelförmigen Probenkörpers möglichst genau bestimmt. Dann wird der Probenkörper in eine mit zwei Zugängen ausgestattete Kammer bekannten Volumens gelegt, die vakuumdicht verschlossen wird. Durch Abstandhalter in der Kammer wird gewährleistet, dass der Probenkörper an keiner Stelle flächig an der Wand anliegt. Die Gesamtmasse wird bestimmt. Die Kammer wird durch einen Zugang auf 0,2 bar evakuiert. Unter Beibehaltung des Vakuums wird über den zweiten Zugang Öl eingesaugt, welches oberflächlich in den Probenkörper eindringt. Die Kammer wird geschlossen und gewogen. Aus der Gewichtszunahme erhält man die Masse des eingedrungenen Öls. Aus der Dichte und der Masse des Öls, dem Kammervolumen sowie der Dichte und der Masse des Probenkörpers kann das Volumen und damit die Masse des in die Oberfläche des Probenkörpers eingedrungenen Öls berechnet werden. In der folgenden Tabelle sind die Ölaufnahmen ausgewählter, kommerziell verfügbarer Schäume aufgelistet.

**Tabelle 1: Ölaufnahme einiger Polymerschäume mit Dichten im Bereich 60-80 kg/m².**

| Typ/Hersteller | Basis | Dichte kg/m³ | Ölaufnahme kg/m² |
|---|---|---|---|
| R82.60 / Airex | PEI | 60 | 0,68 |
| R82.80 / Airex | PEI | 80 | 0,30 |
| C70.75 /Airex | PVC | 80 | 0,44 |
| ROHACELL® 71A | PMI | 72 | 0,18 |
| ROHACELL® 71 RIST | PMI | 72 | 0,23 |
| ROHACELL® 71 WF | PMI | 72 | 0,48 |

Die Werte in der Tabelle zeigen, dass über eine Verringerung der Harzaufnahme des Kernwerkstoffes erhebliche Gewichtseinsparungen möglich sind. Eine quadratische Platte aus ROHACELL® 71 RIST der Abmessungen 1000x1000x10mm³ wiegt 0,72 kg, nimmt aber bei der Verarbeitung 0,46 kg Harz auf. Eine entsprechende Platte aus ROHACELL® 71 WF nimmt sogar 0,96 kg Harz auf, also mehr als ihr Eigengewicht.

Zur Gewichtseinsparung bei Sandwichkonstruktionen ist es daher notwendig, Schäume mit besonders geringer Harzaufnahme auszuwählen. Die Werte der Ölaufnahme der in Tabelle 1 aufgelisteten Schäume erreichen im Fall von ROHACELL^{®} 71A mit 0,18 kg/m² schon niedrige Werte. Dennoch wären Schäume mit einer noch geringeren Harzaufnahme wünschenswert. Darüber hinaus ist ROHACELL® 71A unter dem Druck und der Temperatur, wie sie zur Härtung mancher Harzsysteme notwendig sind, nicht ausreichend beständig. Abhilfe schafft hier ROHACELL^{®} 71RIST, das aber eine etwas höhere Harzaufnahme aufweist.

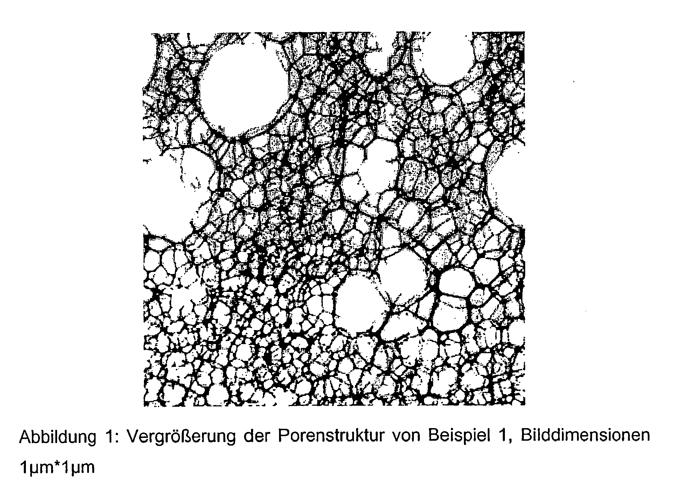

In DE2726260 wird die Herstellung von Polymethacrylimid-Schäumen (PMI-Schäumen) beschrieben, die ausgezeichnete mechanische Eigenschaften auch bei hohen Temperaturen aufweisen. Die Herstellung der Schäume erfolgt im Gussverfahren, d.h. Monomere und erforderliche Zusatzstoffe werden gemischt und in einer Kammer polymerisiert. Das Polymerisat wird in einem zweiten Schritt durch Erwärmen geschäumt. Ein Nachteil der in DE2726260 beschriebenen Schäume ist ihre grobe Porenstruktur. Durch Variation der Treibmittel kann die Porengröße bereits erheblich gesenkt werden, ist aber zur Herstellung von Kernwerkstoffen für Harzinjektionsverfahren immer noch zu grob (Vergleichsbeispiel 1) und zeigt eine uneinheitliche Porengrößenverteilung (Abbildung 1).

Die Herstellung von PMI-Schäumen mit noch kleineren Poren gelang durch die Verwendung von unlöslichen Nukleierungsmitteln (DE 10212235.0). Die Verwendung von unlöslichen Nukleierungsmitteln im Gussverfahren bringt jedoch erheblichen Mehraufwand bei der Produktion mit sich. Das zu polymerisierende Monomergemisch hat eine Dichte von nur ca 0,8 g/cm³. Als Nukleierungsmittel in Betracht kommende Substanzen wie beispielsweise Siliziumdioxid, Zinksulfid, Natrium- oder Kaliumchlorid haben höhere Dichten als das Monomergemisch und setzen sich daher sofort ab. Ein Schaum mit gleichmäßiger Porenstruktur kann nur erhalten werden, wenn die Absetzung des Nukleierungsmittels unterdrückt wird. Dazu müssen dem Monomergemisch Antiabsetzmittel wie beispielsweise Aerosil und Ruße oder Verdickungsmittel wie lösliche, hochmolekulare Polymere zugesetzt werden und diese aufwändig gemeinsam mit dem Nukleierungsmittel in die Gemische eingearbeitet werden.

Feinporige Schäume auf der Basis von PMI wurden darüber hinaus in EP 532023 beschrieben (Vergleichsbeispiel 7). Das dort beschriebene Verfahren weist aber verschiedene, gravierende Nachteile auf. Zur Polymerisation wurden relativ hohe Konzentrationen an Initiator verwendet, so dass das resultierende Polymer trotz der Herstellung im Gussverfahren nur ein gewichtsmittleres Molekulargewicht im Bereich von 50-500 kDa aufweist. Weiterhin wurde der Rezeptur kein Vernetzer zugesetzt. Die resultierenden Schäume haben aus diesen Gründen nur eine niedrige Wärmeformbeständigkeit und ein schlechtes Kriechverhalten.

Feinporige Schaumstoffe sind bekannt und werden unter dem Namen ROHACELL® von der Röhm GmbH & Co KG vertrieben. Es ist möglich, eine Feinporigkeit durch eine Variation von Treibmitteln oder durch den Zusatz von unlöslichen Nukleierungsmitteln zu erreichen. Problematisch ist jedoch, dass die über eine Variation der Treibmittel erreichte Feinporigkeit nicht immer ausreichend ist. Feinporigere Materialien können durch die Verwendung von unlöslichen Nukleierungsmitteln hergestellt werden, letztere erfordern jedoch die Verwendung von Antiabsetzmitteln, was einen erhöhten Aufwand in der Produktion mit sich bringt.

Aufgabe der Erfindung war es daher, Formulierungen zur Herstellung von besonders feinporigen PMI-Schaumstoffen zu finden, ohne dass dabei auf den Einsatz von unlöslichen Nukleierungsmitteln zurückgegriffen wird. Die Schaumstoffe sollen darüber hinaus gleich gute thermomechanische Eigenschaften wie die bekannten PMI-Schäume aufweisen.

Die Aufgabe wird durch ein Verfahren zur Herstellung von schäumbaren vernetzten Polymerisaten gelöst, indem ein Gemisch aus
(A) 30-70 GewT Methacrylsäure,
   30-60 GewT Methacrylnitril,
   0-30 GewT weiteren vinylisch ungesättigten Monomeren,
(B) 0,01-15 GewT tert-Butylmethacrylat und/oder tert-Butylacrylat,
(C) 0,01-10 GewT Treibmittel,
(D) 0,01-10 GewT Vernetzern, d.h.
   (D1) radikalisch polymerisierbaren, mehrfach ungesättigten Verbindungen und/oder
   (D2) ionischen Vernetzers in Form eines Salzes, enthaltend ein mindestens zweiwertiges Metallkation, das in der Monomermischung löslich ist,
(E) 0,01 bis 2 GewT Polymerisationsinitiatoren,
(F) 0 bis 20 GewT an üblichen Zusatzstoffen wie z.B. Antistatika, Antioxidantien, Entformungsmittel, Schmiermittel, Farbstoffe, Flammschutzmittel, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher

in Substanz zu einer Platte polymerisiert wird, welche ggf. getempert und anschließend bei Temperaturen von 150 bis 250 °C geschäumt wird.
Gegenstand der Erfindung ist außerdem ein schäumbares vernetztes Polymerisat aus
(A) 30-70 GewT Methacrylsäure,
   30-60 GewT Methacrylnitril,
   0-30 GewT weiteren vinylisch ungesättigten Monomeren,
(B) 0,01-15 GewT tert-Butylmethacrylat und/oder tert-Butylacrylat,
(C) 0,01-10 GewT Treibmittel,
(D) 0,01-10 GewT Vernetzern, d.h.
   (D1) radikalisch polymerisierbaren, mehrfach ungesättigten Verbindungen und/oder
   (D2) ionischen Vernetzers in Form eines Salzes, enthaltend ein mindestens zweiwertiges Metallkation, das in der Monomermischung löslich ist,
(E) 0,01 bis 2 GewT Polymerisationsinitiatoren,
(F) 0 bis 20 GewT an üblichen Zusatzstoffen wie z.B. Antistatika, Antioxidantien, Entformungsmittel, Schmiermittel, Farbstoffe, Flammschutzmittel, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher.

Bevorzugt wird ein schäumbares vernetztes Polymerisat aus
(A) 30-70 GewT Methacrylsäure,
   30-60 GewT Methacrylnitril,
   0-30 GewT weiteren vinylisch ungesättigten Monomeren,
(B) 0,01-4,99 GewT tert-Butylmethacrylat und/oder tert-Butylacrylat,
(C) 0,01-10 GewT Treibmittel,
(D) 0,01-10 GewT Vernetzern, d.h.
   (D1) radikalisch polymerisierbaren, mehrfach ungesättigten Verbindungen und/oder
   (D2) ionischen Vernetzers in Form eines Salzes, enthaltend ein mindestens zweiwertiges Metallkation, das in der Monomermischung löslich ist,
(E) 0,01 bis 2 GewT Polymerisationsinitiatoren,
(F) 0 bis 20 GewT an üblichen Zusatzstoffen
verwendet.

Dabei wurde überraschenderweise festgestellt, dass das Einpolymerisieren von geringen Mengen tert-Butylmethacrylat oder tert-Butylacrylat zu Schäumen mit sehr guten thermomechanischen Eigenschaften und einer äußerst feinen und gleichmäßigen Porenstruktur führt.

Es wurde gefunden, dass mit dem erfindungsgemäßen Verfahren Schäume mit großen Molmassen hergestellt werden können, die durch den geringen Anteil tert-Butylmethacrylat bzw. tert-Butylacrylat hervorragende thermomechanische Eigenschaften aufweisen. Gute Schäume erhält man bei der Verwendung von 0,01- 15 GewT tert-Butylmethacrylat und/oder tert-Butylacrylat. Größere Anteile tert-Butylmethacrylat bzw. tert-Butylacrylat führen zur Erweichung des Polymerisats, was zu einer Verschlechterung der thermomechanischen Eigenschaften führt (Vergleichsbeispiel 7a). Es wurden schäumbare Polymerisate mit Molmassen >600 kDa erhalten, die zu sehr feinporigen Schäumen weiterverarbeitet werden können.

Bevorzugt werden 0,01-4,99 GewT tert-Butylmethacrylat und/oder tert-Butylacrylat, besonders bevorzugt 1,0-4,99 GewT tert-Butylmethacrylat und/oder tert-Butylacrylat verwendet. Für gleichmäßig und kontrolliert schäumbare Polymerisate müssen 0,01-10 GewT, bevorzugt 0,05-3 GewT Vernetzer zugegeben werden. Für eine gute Schäumung müssen zudem 0,01-10 GewT, bevorzugt 2-8 GewT Treibmittel zugegeben werden.

Damit erhält man feinporige Schäume, deren Dichte im gewünschten Bereich zwischen 30 und 300 kg/m³ liegen.

Gegenüber der DE 10212235.0 bietet das erfindungsgemäße Verfahren neben der weniger aufwändigen Herstellung durch Verzicht auf heterogene Nukleierungsmittel den Vorteil, dass die Schäume eine noch feinere Porenstruktur aufweisen. Dementsprechend ist auch die Harzaufnahme noch geringer (Beipiele 2 und 8 in Tabelle 2).

Beispiele für die unter (A) genannten weiteren vinylisch ungesättigten Monomere sind: Acryl- oder Methacrylsäure sowie deren Ester mit niedrigen Alkoholen mit 1-4 C-Atomen, Styrol, Maleinsäure oder deren Anhydrid, Itakonsäure oder deren Anhydrid, Vinylpyrrolidon, Vinylchlorid und/oder Vinylidenchlorid. Der Anteil der Comonomere, die sich nicht oder nur sehr schwer zu Anhydrid oder Imid cyclisieren lassen, soll 30 Gew.T, vorzugsweise 20 Gew.T und besonders bevorzugt 10 Gew.T, bezogen auf das Gewicht der Monomeren, nicht übersteigen.

Als Treibmittel (C) können folgende Verbindungen oder Gemische daraus verwendet werden: Formamid, Ameisensäure, Harnstoff, Itakonsäure, Zitronensäure, Dicyandiamid, Wasser, Monoalkylharnstoffe, Dimethylharnstoff, 5,5'-Azo-bis-5-äthyl-1,3-dioxan, 2,2'-Azo-bis-isobuttersäurebutylamid, 2,2'-Azo-bis-isobuttersäure-N-diethylamid, 2,2',4,4,4',4'-Hexamethyl-2.2'-azopentan, 2,2'-Azo-bis-2-methyl-propan, Dimethylcarbonat, Di-tert-butycarbonat, Acetoncyanhydrincarbonat, Oxi-isobuttersäuremethylester-carbonat, N-Methylurethan, N-Ethylurethan, N-tert-butylurethan, Urethan, Oxalsäure, Maleinsäure, Oxi-isobuttersäure, Malonsäure, Cyanformamid, Dimethylmaleinsäure, Methantetracarbonsäuretetraäthylester, Oxamidsäure-n-butylester, Methantricarbonsäuretrimethylester, Methantricarbonsäuretriäthylester, sowie einwertige Alkohole aus 3-8 Kohlenstoffatomen wie z.B. Propanol-1, Propanol-2, Butanol-1, Butanol-2, tert-Butanol und iso-Butanol.

Den Rezepturen müssen geringe Mengen Vernetzer (D) zugesetzt werden. Eine leichte Vernetzung stabilisiert den Schaum während des Schäumvorgangs und ermöglicht so die Herstellung von homogenen Schäumen. Gleichzeitig werden die Wärmeformbeständigkeit und das Kriechverhalten des Schaums durch Vernetzer verbessert. Mögliche Vernetzer können in zwei Gruppen unterteilt werden: kovalente Vernetzer (D1), also einpolymerisierbare mehrfach ungesättigte Verbindungen. Als derartige Monomere können z. B. Allylacrylat, Allylmethacrylat, Allylacrylamid, Allylmethacrylamid, Methylen-bis-acrylamid oder -methacrylamid, Diethylenbis(allylcarbonat), Ethylenglykoldiacrylat oder - dimethacrylat, Diethylenglykoldiacrylat oder -dimethacrylat, Triethylenglykoldiacrylat oder dimethacrylat,Tetraethylenglykoldiacrylat oder -dimethacrylat, Tripropylenglykoldiacrylat oder -dimethacrylat, 1,3-Butandioldiacrylat oder -dimethacrylat, 1,4-Butandioldiacrylat oder -dimethacrylat, Neopentyldioldiacrylat oder -dimethacrylat, Hexandiol-1,6-diacrylat oder -dimethacrylat, Trimethylolpropandiacrylat oder -dimethacrylat, Trimethylolpropantriacrylat oder -trimethacrylat, Pentaerythrittriacrylat oder -trimethacrylat, Pentaerythrittetraacrylat oder -tetramethacrylat, die Pentaerythritderivate jeweils ggf. auch als technisches Gemisch aus tri- und tetrafunktionellen Verbindungen, sowie Triallylcyanurat oder Triallylisocyanurat verwendet werden. Als weitere Gruppe kommen ionische Vernetzer (D2) in Betracht. Dies sind mehrwertige Metallkationen, die ionische Brücken zwischen den Säuregruppen der Copolymere ausbilden. Beipiele sind unter anderem die Acrylate oder Methacrylate der Erdalkalimetalle oder des Zinks. Bevorzugt sind Zn- und Mg-(meth)acrylat. Die (Meth)acrylatsalze können auch durch Auflösen z.B. von ZnO oder MgO im Monomeransatz hergestellt werden.

Als Initiatoren (E) werden Verbindungen und Initiatorsysteme verwendet, die radikalische Polymerisationen in Gang setzen können. Bekannte Verbindungsklassen sind Peroxide, Hydroperoxide, Peroxodisulfate, Percarbonate, Perketale, Peroxiester, Wasserstoffperoxid und Azoverbindungen. Beispiele für Initiatoren sind Wasserstoffperoxid, Dibenzoylperoxid, Dicyclohexylperoxodicarbonat, Dilaurylperoxid, Methylethylketonperoxid, Acetylacetonperoxid, Di-tert-butylperoxid, tert-Butylhydroperoxid, Cumolhydroperoxid, t-Butylperoctanoat, tert-Butylper-2-ethylhexanoat, tert-Butylperneodecanoat, tert-Amylperpivalat, tert-Butylperpivalat, tert-Butylperbenzoat, Lithium-, Natrium-, Kalium- und Ammoniumperoxodisulfat, Azoisobutyronitril, 2,2-Azobisiso-2,4-dimethylvaleronitril, 2,2-Azobisisobutyro-nitril, 2,2'-Azo-bis(2-amidinopropan)dihydrochlorid, 2-(Carbamoylazo)isobutyronitril und 4,4'-Azobis(cyanovaleriansäure). Gleichfalls geeignet sind Redoxinitiatoren (H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, 1 New York, 1978). Es kann günstig sein, Initiatoren und Initiatorsysteme mit unterschiedlichen Zerfallseigenschaften bezüglich Zeit und Temperatur zu kombinieren. Bevorzugt werden die Initiatoren (E) in Mengen von 0,01 bis 2 Gew.T, besonders bevorzugt von 0,15 bis 1,5 GewT bezogen auf das Gesamtgewicht der Monomere eingesetzt.

Des Weiteren können den Gemischen übliche Zusatzstoffe (F) zugesetzt werden. Hierzu gehören unter anderem Antistatika, Antioxidantien, Entformungsmittel, Schmiermittel, Farbstoffe, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher. Weitere mögliche Zusätze sind Flammschutzmittel. Neben halogenhaltigen Flammschutzmitteln, die teilweise Antimonoxide enthalten, können auch phosphorhaltige Verbindungen eingesetzt werden. Phosphorhaltige Verbindungen sind wegen der geringeren Rauchgastoxizität im Brandfall bevorzugt. Zu den Phosphorverbindungen gehören unter anderem Phosphane, Phosphanoxide, Phosphoniumverbindungen, Phosphonate, Phosphite und/oder Phosphate. Diese Verbindungen können organischer und/oder anorganischer Natur sein, wie beispielsweise Phosphorsäuremonoester, Phosphonsäuremonoester, Phosphorsäurediester, Phosphonsäurediester und Phosphorsäuretriester sowie Polyphosphate.

Aus den erfindungsgemäß hergestellten Poly(meth)acrylimid-Schaumstoffe können Schichtwerkstoffe hergestellt werden. Die erfindungsgemäßen Poly(meth)acrylimid-Schaumstoffe haben ein breites Anwendungsgebiet. Sie können in Kraftfahrzeugen, Schienenfahrzeugen, Luftfahrzeugen, Wasserfahrzeugen, Raumfahrzeugen, Maschinenteilen, Antennen, Röntgentischen, Lautsprechern und Rohren eingesetzt werden.

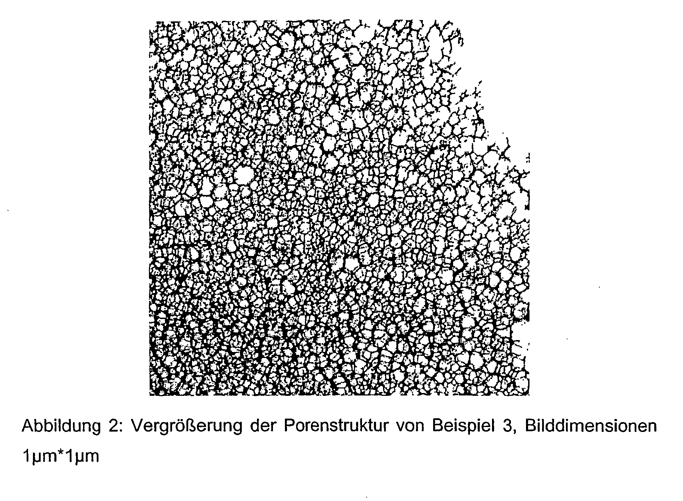

Gegenüber den Verfahren aus dem Stand der Technik bietet das erfindungsgemäße Verfahren folgende Vorteile:
- Zur Polymerisation werden homogene, dünnflüssige Gemische eingesetzt, die in technisch einfacher Weise hergestellt und weiterverarbeitet werden können.
- die Schäume weisen eine äußerst feine Porenstruktur und somit eine äußerst geringe Harzaufnahme auf (Tabelle 3)
- die mechanischen Eigenschaften, die Wärmeformbeständigkeit und das Kriechverhalten sind deutlich besser als bei den Vergleichsproben (Tabelle 4)
- Die Schäume weisen eine besonders homogene Porenstruktur auf (Abbildung 2)

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1-7:

Die in der Tabelle angegebenen Mengen Methacrylsäure (MAA), Methacrylnitril (MAN), tert.-Butanol (t-BuOH) und tert.-Butylmethacrylat (tBMA) sowie jeweils 0,17 GewT Allylmethacrylat, 0,1 GewT MgO, 0,40 GewT tert-Butylperpivalat, 0,036 GewT tert-Butylper-2-ethyl-hexanoat, 0,10 GewT tert-Butylperbenzoat, 0,103 GewT Cumylperneodecanoat, 0,005 GewT Benzochinon und 0,16 GewT PAT 1037 (Vertrieb: E. und P. Würtz GmbH & Co. KG, Industriegebiet, In der Weide 13+18, 55411 Bingen, Sponsheim.) als Trennmittel wurden sorgfältig gemischt. Das Gemisch wurde 48 Stunden in einer 23 mm dicken Kammer polymerisiert und anschließend 3h einem von 40°C bis 115°C reichenden Temperaturprogramm unterworfen. Die Polymerisate wurden in einem Umluftschrank unter den in der Tabelle angegebenen Bedingungen geschäumt. Die Porengrößen wurden mit Hilfe eines Makroskops bestimmt.

**Tabelle 2: Zusammensetzung, Schäumbedingungen, Dichte und Porengröße der Schaumproben 1-7.**

| Beispiel | MAA GewT | MAN GewT | tBMA GewT | t-BuOH GewT | Schäumen °C/h | Dichte Kg/m³ | Porengröße µm |
|---|---|---|---|---|---|---|---|
| 1 | 50,0 | 50,0 | 0,0 | 8,0 | 220/2 | 61 | 50-200 |
| 2 | 50,0 | 50,0 | 1,0 | 7,5 | 220/2 | 69 | 35 |
| 3 | 49,0 | 50,0 | 2,0 | 7,0 | 200/2 | 75 | 20 |
| 4 | 47,0 | 50,0 | 4,0 | 6,0 | 200/2 | 77 | 10 |
| 5 | 46,0 | 50,0 | 6,0 | 1,5 | 230/2 | 81 | 7 |
| 6 | 44,0 | 50,0 | 10,0 | 2,0 | 230/2 | 57 | 7 |
| 7 a) | 39,7 | 40,3 | 20,0 | 0 | 200/2 | 75 | 5 |

| | | | | | | | |
|---|---|---|---|---|---|---|---|
| a) Sehr spröder, schwer zu bearbeitender Schaum | | | | | | | |

Die Porengrößen in Tabelle 2 zeigen deutlich, dass durch Substitution von t-BuOH durch tBMA eine erheblich Verfeinerung der Porenstruktur möglich ist. tBMA wirkt offensichtlich gleichzeitig als Treib- und Nukleierungsmittel.

### Vergleichsbeispiel 8 (Unlösliche Nukleierungsmittel)

Zu einem Gemisch aus 5000 g Methacrylsäure (50,0 GewT), 5000 g Methacrylnitril (50,0 GewT) und 17g (0,17 GewT) Allylmethacrylat wurden als Treibmittel 290 g (2,9 Gewichtsteile) Isopropanol und 290 g (2,9 Gewichtsteile) Formamid zugesetzt. Des weiteren wurden der Mischung 40g (0,40 GewT) tert-Butylperpivalat, 3,6 g (0,036 GewT) tert-Butylper-2-ethyl-hexanoat, 10 g (0,10 GewT),tert-Butylperbenzoat, 10,3 g (0,103 GewT) Cumylperneodecanoat, 400 g (4,0 GewT) Degalan BM 310 (hochmolekulares Polymethylmethacrylat), 0,5 g (0,005 GewT) Benzochinon und 16,0 g (0,32 GewT) PAT 1037 als Trennmittel hinzugefügt.

Als Nukleierungsmittel wurden dem Gemisch 25g SiO₂-Partikel mit einer Korngröße <5µm (Quarzmehl mit dem Markenname Mikrosil^{®} LM500, Vertrieb Euroquarz GmbH, Kirchhellener Allee 53, 46282 Dorsten) hinzugefügt.

Das Gemisch wurde bis zur Homogenisierung gerührt und anschließend bei 18,5 h bei 39°C in einer aus zwei Glasplatten der Größe 50x50cm und einer 2,3 cm dicken Randabdichtung gebildeten Kammer polymerisiert. Anschließend wurde das Polymerisat zur Endpolymerisation 17,25h einem von 40°C bis 115°C reichenden Temperprogramm unterworfen. Die darauf folgende Schäumung erfolgte 2h bei 205°C. Der so erhaltene Schaumstoff wies ein Raumgewicht von 77 kg/m³ auf.

### Vergleichsbeispiel 9 (kein Nukleierungsmittel)

Es wurde verfahren wie in Vergleichsbeispiel 8 beschrieben mit dem Unterschied, dass kein Nukleierungsmittel verwendet wurde. Der so erhaltene Schaumstoff wies ein Raumgewicht von 77 kg/m³ auf.

**Tabelle 3: Porengröße und Harzaufnahme ausgewählter Proben im Vergleich**

| Beispiel | Schaumdichte kg/m³ | Porengröße µm | Harzaufnahme kg/m² |
|---|---|---|---|
| 2 | 69 | 35 | <0,040 a) |
| 8 | 77 | 100-200 | 0,061 |
| 9 | 77 | Nicht bestimmt | 0,287 |

| | | | |
|---|---|---|---|
| a) nicht messbar | | | |

**Tabelle 4: Mechanische Daten**

| Beispiel | Dichte Kg/m³ | Druckfestigkeit a) MPa | Wärmeform-beständigkeit b) °C | Kriechen c) % |
|---|---|---|---|---|
| 2 | 69 | 2,1 | 224 | -0,15 |
| 6 | 68 | 1,8 | 215 | 0,05 |
| 7 | 66 | 1,8 | 210 | 0,57 |
| 8 | 67 | 1,5 | Nicht bestimmt | 0,3 |

| | | | | |
|---|---|---|---|---|
| a) DIN 53452 b) DIN 53424 c) DIN 53425, ASTM D621 und D2990: 180°C, 2h, 0,35 MPa | | | | |

## Patentansprüche

1. Verfahren zur Herstellung von schäumbaren vernetzten Polymerisaten, **dadurch gekennzeichnet, dass** man ein Gemisch aus
(A) 30-70 GewT Methacrylsäure,
30-60 GewT Methacrylnitril,
0-30 GewT weiteren vinylisch ungesättigten Monomeren,
(B) 0,01-15 GewT tert-Butylmethacrylat und/oder tert-Butylacrylat,
(C) 0,01-10 GewT Treibmittel,
(D) 0,01-10 GewT Vernetzer,
(E) 0,01 bis 2 GewT Polymerisationsinitiatoren und
(F) 0 bis 20 GewT üblichen Zusatzstoffen
in Substanz zu einer Platte polymerisiert, welche gegebenenfalls getempert und anschließend bei Temperaturen von 150 bis 250°C geschäumt wird.

2. Verfahren zur Herstellung von schäumbaren vernetzten Polymerisaten gemäß Anspruch 1, **dadurch gekennzeichnet, dass** 0,01-4,99 GewT tert-Butylmethacrylat und/oder tert-Butylacrylat eingesetzt werden.

3. Schäumbares vernetztes Polymerisat aus
(A) 30-70 GewT Methacrylsäure,
30-60 GewT Methacrylnitril,
0-30 GewT weiteren vinylisch ungesättigten Monomeren,
(B) 0,01-15 GewT tert-Butylmethacrylat und/oder tert-Butylacrylat,
(C) 0,01-10 GewT Treibmittel,
(D) 0,01-10 GewT Vernetzer,
(E) 0,01 bis 2 GewT Polymerisationsinitiatoren und
(F) 0 bis 20 GewT üblichen Zusatzstoffen.

4. Schäumbares vernetztes Polymerisat gemäß Anspruch 3, **dadurch gekennzeichnet, dass** 0,01-4,99 GewT tert-Butylmethacrylat und/oder tert-Butylacrylat eingesetzt werden.

5. Poly(meth)acrylimid-Schaumstoff, **dadurch gekennzeichnet dass** er durch Schäumen von Polymerisat nach Anspruch 1 oder 2 erhalten wird.

6. Schichtwerkstoff enthaltend eine Schicht eines Poly(meth)acrylimid-Schaumstoffes gemäß Anspruch 5.

7. Kraftfahrzeug, Schienenfahrzeug, Wasserfahrzeug, Luftfahrzeug, Raumfahrzeug **dadurch gekennzeichnet, dass** Poly(meth)acrylimid-Schaumstoffe gemäß Anspruch 5 enthalten sind.

8. Maschinenteil, **dadurch gekennzeichnet, dass** Poly(meth)acrylimid-Schaumstoffe gemäß Anspruch 5 enthalten sind.

9. Antenne, **dadurch gekennzeichnet, dass** Poly(meth)acrylimid-Schaumstoffe gemäß Anspruch 5 enthalten sind.

10. Röntgentisch, **dadurch gekennzeichnet, dass** Poly(meth)acrylimid-Schaumstoffe gemäß Anspruch 5 enthalten sind.

11. Lautsprecher, **dadurch gekennzeichnet, dass** Poly(meth)acrylimid-Schaumstoffe gemäß Anspruch 5 enthalten sind.

12. Rohr, **dadurch gekennzeichnet, dass** Poly(meth)acrylimid-Schaumstoffe gemäß Anspruch 5 enthalten sind.

## Claims

1. Process for producing foamable crosslinked polymers, **characterized in that** a mixture composed of
(A) 30-70 parts by weight of methacrylic acid,
30-60 parts by weight of methacrylonitrile,
0-30 parts by weight of other monomers having vinyl unsaturation,
(B) 0.01-15 parts by weight of tert-butyl methacrylate and/or tert-butyl acrylate,
(C) 0.01-10 parts by weight of blowing agent,
(D) 0..01-10 parts by weight of crosslinking agent,
(E) 0.01 to 2 parts by weight of polymerization initiators and
(F) 0 to 20 parts by weight of conventional additives
is polymerized in bulk to give a sheet which, where appropriate, is heat-conditioned and then is foamed at temperatures of from 150 to 250°C.

2. Process for producing foamable crosslinked polymers according to Claim 1, **characterized in that** 0.01-4.99 parts by weight of tert-butyl methacrylate and/or tert-butyl acrylate are used.

3. Foamable crosslinked polymer composed of
(A) 30-70 parts by weight of methacrylic acid,
30-60 parts by weight of methacrylonitrile,
0-30 parts by weight of other monomers having vinyl unsaturation,
(B) 0.01-15 parts by weight of tert-butyl methacrylate and/or tert-butyl acrylate,
(C) 0.01-10 parts by weight of blowing agent,
(D) 0.01-10 parts by weight of crosslinking agent,
(E) 0.01 to 2 parts by weight of polymerization initiators and
(F) 0 to 20 parts by weight of conventional additives.

4. Foamable crosslinked polymer according to Claim 3, **characterized in that** 0.01-4.99 parts by weight of tert-butyl methacrylate and/or tert-butyl acrylate are used.

5. Poly(meth)acrylimide foam, **characterized in that** it is obtained via foaming of polymer according to Claim 1 or 2.

6. Laminated material comprising a layer of a poly-(meth)acrylimide foam according to Claim 5.

7. Motor vehicle, rail vehicle, watercraft, aircraft, spacecraft, **characterized in that** it comprises poly(meth)acrylimide foams according to Claim 5.

8. Machine component, **characterized in that** it comprises poly(meth)acrylimide foams according to Claim 5.

9. Antenna, **characterized in that** it comprises poly-(meth)acrylimide foams according to Claim 5.

10. X-ray table, **characterized in that** it comprises poly(meth)acrylimide foams according to Claim 5.

11. Loudspeaker, **characterized in that** it comprises poly(meth)acrylimide foams according to Claim 5.

12. Pipe, **characterized in that** it comprises poly-(meth)acrylimide foams according to Claim 5.

## Revendications

1. Procédé pour la préparation de polymères réticulés transformée en mousse, **caractérisé en ce que** l'on polymérise un mélange de :
(A) 30 à 70 parties en poids d'acide méthacrylique,
30 à 60 parties en poids de nitrile méthacrylique,
0 à 30 parties en poids d'autres monomères vinyliquement insaturés,
(B) 0,01 à 15 parties en poids de tert-butylméthacrylate et/ou tert-butylacrylate,
(C) 0,01 à 10 parties en poids de gaz propulseur,
(D) 0,01 à 10 parties en poids de réticulant,
(E) 0,01 à 2 parties en poids d'initiateurs de polymérisation et
(F) 0 à 20 parties en poids d'additifs usuels
en substance pour donner une plaque, laquelle est éventuellement trempée puis transformée en mousse à des températures de 150 à 250°C.

2. Procédé pour la préparation de polymères réticulés pouvant être transformés en mousse suivant la revendication 1, **caractérisé en ce que** 0,01 à 4,99 parties en poids de tert-butylméthacrylate ou de tert-butylacrylate sont mises en oeuvre.

3. Polymère réticulé pouvant être transformé en mousse à partir de
(A) 30 à 70 parties en poids d'acide méthacrylique, 30 à 60 parties en poids de nitrile méthacrylique,
0 à 30 parties en poids d'autres monomères vinyliquement insaturés,
(B) 0,01 à 15 parties en poids de tert-butylméthacrylate et/ou tert-butylacrylate,
(C) 0,01 à 10 parties en poids de gaz propulseur,
(D) 0,01 à 10 parties en poids de réticulant,
(E) 0,01 à 2 parties en poids d'initiateurs de polymérisation et
(F) 0 à 20 parties en poids d'additifs usuels.

4. Polymère réticulé pouvant être transformé en mousse suivant la revendication 3, **caractérisé en ce que** 0,01 à 4,99 parties en poids de tert-butylméthacrylate et/ou de tert-butylacrylate sont mises en oeuvre.

5. Mousse de poly(méth)acrylimide, **caractérisée en ce que** celle-ci est obtenue par moussage de polymère suivant la revendication 1 ou 2.

6. Matière active en coucher contenant une couche d'une mousse de poly(méth)acrylimide suivant la revendication 5.

7. Véhicule automobile, véhicule ferroviaire, bateau, aéronef, engin spatial **caractérisés en ce qu'**ils contiennent des mousses de poly(méth)acrylimide suivant la revendication 5.

8. Pièce de machine, **caractérisée en ce qu'**elle contient des mousses de poly(méth)acrylimide suivant la revendication 5 .

9. Antenne **caractérisée en ce qu'**elle contient des mousses de poly(méth)acrylimide suivant la revendication 5.

10. Table de radiographiue **caractérisée en ce qu'**elle contient des mousses de poly(méth)acrylimide suivant la revendication 5.

11. Haut-parleur, **caractérisé en ce qu'**il contient des mousses de poly(méth)acrylimide suivant la revendication 5.

12. Tuyau **caractérisé en ce qu'**il contient des mousses de poly(méth)acrylimide suivant la revendication 5 sont contenues.
